# EUROPEAN PATENT APPLICATION

(11) **EP 4 564 471 A1**
(43) Date of publication of application: **04.06.2025**
(21) Application number: 23846263.4
(22) Date of filing: 13.07.2023
(51) Int. Cl.: H01M 4/36, H01M 4/38, H01M 4/48

(54) **NEGATIVE ELECTRODE ACTIVE MATERIAL**

(30) Priority: 29.07.2022 JP 2022122195; 17.04.2023 JP 2023067211
(71) Applicant: Daido Steel Co., Ltd., Nagoya-shi Aichi 461-8581 (JP)
(72) Inventor: KIMURA, Yuta, Nagoya-shi, Aichi 457-8545 (JP); SHIMOMURA, Kyohei, Nagoya-shi, Aichi 457-8545 (JP); OHISA, Hiroyuki, Nagoya-shi, Aichi 457-8545 (JP)
(74) Representative: Diehl & Partner
(86) International application number: PCT/JP2023/025970
(87) International publication number: WO 2024/024532

(57) **Abstract**

The present invention relates to a negative electrode active material which contains Si particles, first particles and second particles, wherein: the volume expansion ratio of the first particles due to Li absorption is 0-80%; and the volume expansion ratio of the second particles due to Li absorption is 100-300%.

## Description

### TECHNICAL FIELD

The present invention relates to a negative electrode active material.

### BACKGROUND ART

A lithium ion battery has an advantage of being able to miniaturize with a high capacity and a high voltage, and has been widely used as a power supply for mobile phones and laptops. In recent years, it has attracted much expectation as a power supply for power applications such as electric vehicles and hybrid vehicles, and the development thereof has been actively promoted.

In the lithium ion battery, lithium ions move between a positive electrode and a negative electrode to cause charging and discharging. On a negative electrode side, Li ions are occluded in a negative electrode active material during charging, and Li ions are released from the negative electrode active material during discharging.

Carbon materials such as graphite have been widely used as the negative electrode active material for the negative electrode, but a theoretical capacity of graphite is only 372 mAh/g. Therefore, in order to increase the capacity, metal materials such as Si and Sn are being considered as alternative materials to the carbon-based negative electrode materials.

Si has a theoretical capacity of about 3600 mAh/g, and Sn has a theoretical capacity of about 800 mAh/g, so that both are expected to have a higher capacity. On the other hand, Si and Sn have a large volume change such as expansion and contraction along with occlusion and release of the lithium ions. The volume change causes the negative electrode active material to peel off from a current collector, resulting in collapse of the electrode and a decrease in cycle characteristics.

In response to this, a method has been studied in which the electrode collapse is prevented by mixing a material having a small volume expansion rate when lithium ions are occluded (hereinafter, sometimes simply referred to as "Li occlusion").

For example, Patent Literature 1 discloses a negative electrode active material for a lithium secondary battery, containing a Si alloy having Si crystallites dispersed in a first metal matrix, the Si alloy being dispersed in a second metal matrix having Li activity. With such a configuration, collapse of the Si alloy along with the occlusion and release of the lithium ions is prevented, and the negative electrode active material is less likely to fall off the current collector, thereby improving the cycle characteristics.

### CITATION LIST

### PATENT LITERATURE

Patent Literature 1: JP2012-14866A

### SUMMARY OF INVENTION

### TECHNICAL PROBLEM

However, the effect of mixing the material having a small volume expansion rate on preventing the electrode collapse is limited, and the effect of improving the cycle characteristics is also limited. Thus, further improvements are needed to address the decrease in cycle characteristics caused by a stress generated by the occlusion and release of the lithium ions. In addition, it has been difficult to simultaneously achieve good cycle characteristics and maintain a high electrode capacity.

Therefore, an object of the present invention is to provide a negative electrode active material that maintains a high electrode capacity and that also has good cycle characteristics.

### SOLUTION TO PROBLEM

As a result of extensive studies, the inventors of the present invention have found that when the negative electrode active material includes Si particles and further includes two different kinds of particles each having a volume expansion rate within a specific range, the above problems can be solved. Thus, the present invention has been completed.

That is, the present invention relates to the following [1] to [8].
[1] A negative electrode active material including:
   Si particles;
   first particles; and
   second particles, in which
   the first particles have a volume expansion rate due to Li occlusion of 0% to 80%, and
   the second particles have a volume expansion rate due to Li occlusion of 100% to 300%.
[2] The negative electrode active material according to the above [1], in which an average particle diameter of the Si particles and an average particle diameter of the second particles are both 5 µm or less.
[3] The negative electrode active material according to the above [1], having a content of the Si particles of 20 mass% to 80 mass%, a content of the first particles of 10 mass% to 70 mass%, and a content of the second particles of 1 mass% to 60 mass%.
[4] The negative electrode active material according to the above [3], in which the content of the first particles is greater than the content of the second particles.
[5] The negative electrode active material according to the above [1], in which the first particles are at least one kind of particles selected from the group consisting of Fe, Al, Si, and an oxide thereof, and Ni, Ti, Cu, B, C, SiC, and a Si alloy.
[6] The negative electrode active material according to the above [1], in which the second particles are at least one kind of particles selected from the group consisting of AlNi, AlTi, AlFe, and AlCu.
[7] The negative electrode active material according to the above [6], in which the second particles have an oxygen content of 4 mass% or less.
[8] The negative electrode active material according to any one of the above [1] to [7], which is for use in a lithium ion battery.

### ADVANTAGEOUS EFFECTS OF INVENTION

With the negative electrode active material according to the present invention, a high electrode capacity can be maintained, and good cycle characteristics can also be achieved. Therefore, by applying the above negative electrode active material to a lithium ion battery, it is expected that a miniaturized lithium ion battery having a high energy density can be put into practical use.

### DESCRIPTION OF EMBODIMENTS

Hereinafter, the present invention will be described in detail, but the present invention is not limited to the following embodiments and can be modified in any manner without departing from the gist of the present invention. In addition, "to" indicating a numerical range is used to mean that numerical values written before and after it are included as a lower limit value and an upper limit value.

### <Negative Electrode Active Material>

A negative electrode active material according to the present embodiment includes Si particles, first particles, and second particles.

The first particles have a volume expansion rate due to Li occlusion of 0% to 80%, and the second particles have a volume expansion rate due to Li occlusion of 100% to 300%.

Note that, in the present description, the volume expansion rate due to the Li occlusion may be simply referred to as a "volume expansion rate".

The Si particles have a theoretical capacity as high as 3600 mAh/g, whereas the volume expansion rate thereof when lithium ions are occluded is 380%. Therefore, when the lithium ions are occluded into and released from the Si particles, the Si particles are cracked or peeled off from a current collector due to an expansion or contraction stress, and good cycle characteristics cannot be obtained.

In response to this, a method of adding particles that have a small volume change during charging and discharging compared to the Si particles has been studied. However, when the Si particles occlude lithium ions and expand in volume, a difference in expansion between the Si particles and the particles having a small volume change is large, and a large stress is still generated in the negative electrode. As a result, the electrode collapse cannot be sufficiently prevented.

In response to this, it has been found that when the negative electrode active material according to the present embodiment includes two different kinds of particles each having a volume expansion rate due to Li occlusion within a specific range, together with the Si particles, it is possible to alleviate the generation of stress due to the difference in expansion. Accordingly, the electrode collapse can be prevented, and good cycle characteristics can be achieved.

Specifically, the negative electrode active material according to the present embodiment includes, in addition to the Si particles, the first particles having a volume expansion rate due to Li occlusion of 0% to 80% and the second particles having a volume expansion rate due to Li occlusion of 100% to 300%.

Note that, in the present description, the volume expansion rate means a volume change rate before and after Li is occluded into target particles under charging conditions same as those for occluding lithium ions into the Si particles to the maximum extent to have a volume expansion rate of 380%. Specifically, it means an increase amount (vol%) in volume after the Li occlusion with respect to a volume before the Li occlusion. That is, a volume expansion rate of 0% indicates that there is no volume change due to the Li occlusion, and a volume expansion rate of 100% indicates that, due to the Li occlusion, the volume is twice as large as the initial volume before the Li occlusion.

The volume expansion rate is determined by preparing a working electrode using each particle, measuring the thickness of the electrode before and after charging, i.e., before and after the Li occlusion, using a micrometer, and converting an amount of change in electrode thickness into an amount of change in volume. The production conditions for the working electrode and the charging conditions are as follows.

Particles having a particle diameter of about 15 µm are kneaded with acetylene black (conductive aid) and polyimide (binder) in a ratio of particles: acetylene black:polyimide = 80:5:15 (mass ratio) to prepare a slurry. The slurry is applied to a stainless steel (SUS316L) foil in a thickness of 50 µm and dried to obtain a working electrode.

Next, a half cell is prepared using a Li foil as a counter electrode and a non-aqueous electrolytic solution prepared by dissolving LiPF₆ at a concentration of 1 mol/L in a mixed solvent of ethylene carbonate (EC)/dimethyl carbonate (DEC) = 1/1 (molar ratio).

The obtained half cell is charged at a constant current of 0.1 mA until the voltage is 0.002 V vs. [Li⁺/Li]. The charging conditions are charging conditions for occluding the lithium ions until the volume expansion rate of the Si particles reaches 380%.

The first particles have a volume expansion rate due to Li occlusion of 0% to 80%. In the case where the negative electrode active material includes the first particles, even when the Si particles undergo large volume expansion and contraction due to occlusion and release of Li, the volume change of the entire electrode is prevented, and the electrode collapse can be prevented.

The volume expansion rate of the first particles is 0% to 80%, preferably 5% to 70%, more preferably 8% to 60%, and still more preferably 10% to 55%. Here, the volume expansion rate of the first particles is 0% or more, preferably 5% or more, more preferably 8% or more, and still more preferably 10% or more, from the viewpoint of reducing a difference in expansion between the Si particles, the first particles and the second particles. In addition, the volume expansion rate of the first particles is 80% or less, preferably 70% or less, more preferably 60% or less, and still more preferably 55% or less, from the viewpoint of preventing the volume change of the entire electrode due to the occlusion and release of Li.

The second particles have a volume expansion rate due to Li occlusion of 100% to 300%. When the negative electrode active material includes the second particles, the generation of stress due to a difference in volume expansion rate between the Si particles and the first particles is alleviated, and the stress in the negative electrode active material is reduced, thereby making it possible to prevent the electrode collapse.

The volume expansion rate of the second particles is 100% to 300%, preferably 140% to 280%, more preferably 170% to 265%, and still more preferably 200% to 250%. Here, the volume expansion rate of the second particles is 100% or more, preferably 140% or more, more preferably 170% or more, and still more preferably 200% or more, from the viewpoint of providing a more appropriate difference with the volume expansion rate of the first particles and bringing the volume expansion rate closer to that of the Si particles to satisfactorily alleviate the generation of stress. In addition, the volume expansion rate of the second particles is 300% or less, preferably 280% or less, more preferably 265% or less, and still more preferably 250% or less, from the viewpoint of providing a more appropriate difference with the volume expansion rate of the Si particles and bringing the volume expansion rate closer to that of the first particles to satisfactorily alleviate the generation of stress.

In the case where an absolute value of the difference between the volume expansion rate (380%) of the Si particle and the volume expansion rate of the second particles is defined as ΔV1, and an absolute value of the difference between the volume expansion rate of the second particles and the volume expansion rate of the first particles is defined as ΔV2, a ratio represented by ΔV1:ΔV2 is preferably 1: 1 to 1:2, more preferably 1:1.2 to 1:2, still more preferably 1: 1.4 to 1:2, and even more preferably 1: 1.4 to 1:1.7, from the viewpoint of preventing the electrode collapse and achieving good cycle characteristics.

An average particle diameter of the Si particles is not particularly limited, and is preferably 0.5 µm to 10 µm, more preferably 1 µm to 8 µm, and still more preferably 1 µm to 5 µm. Here, the average particle diameter of the Si particles is preferably 0.5 µm or more, and more preferably 1 µm or more, from the viewpoint of preventing a decomposition reaction of an electrolytic solution due to an increase in specific surface area of a powder. In addition, the average particle diameter of the Si particles is preferably 10 µm or less, more preferably 8 µm or less, and still more preferably 5 µm or less, from the viewpoint of achieving better cycle characteristics, since a smaller average particle diameter leads to a smaller absolute amount of volume expansion.

The average particle diameter of the Si particles can be adjusted by using appropriate pulverization means such as a ball mill, a disk mill, a coffee mill, or mortar pulverization, and if necessary, classifying the Si particles.

Note that, the average particle diameter in the present description is a median diameter (D50) determined from a volume-based particle size distribution measured using a laser diffraction/scattering type particle size distribution measuring device.

An average particle diameter of the second particles is not particularly limited, and is preferably 0.5 µm to 10 µm, more preferably 1 µm to 8 µm, and still more preferably 1 µm to 5 µm. Here, the average particle diameter of the second particles is preferably 0.5 µm or more, and more preferably 1 µm or more, from the viewpoint of preventing a decomposition reaction of an electrolytic solution due to an increase in specific surface area of a powder. In addition, the average particle diameter of the second particles is preferably 10 µm or less, more preferably 8 µm or less, and still more preferably 5 µm or less, from the viewpoint of achieving better cycle characteristics, since a smaller average particle diameter leads to a smaller absolute amount of volume expansion.

The average particle diameter of the second particles can be adjusted by pulverization and, if necessary, classification, in the same manner as the average particle diameter of the Si particles.

In addition, it is even more preferable that the average particle diameters of the Si particles and the second particles are both 0.5 µm or more, and it is even still more preferable that the average particle diameters are both 5 µm or less. The average particle diameters of the particles can be changed within the ranges described above.

Since the first particles have a small volume expansion rate, the influence of the average particle diameter on the cycle characteristics is limited, as compared with the Si particles and the second particles. Therefore, an average particle diameter of the first particles is not particularly limited, and is, for example, 0.5 µm to 10 µm, may be 1 µm to 8 µm, or may be 1 µm to 5 µm. Here, the average particle diameter of the first particles is, for example, 0.5 µm or more, and may be 1 µm or more, and is, for example, 10 µm or less, and may be 8 µm or less, or may be 5 µm or less.

The average particle diameter of the first particles can be adjusted by pulverization and, if necessary, classification, in the same manner as the average particle diameter of the Si particles or the second particles.

A content of the Si particles in the negative electrode active material is preferably 15 mass% to 85 mass%, more preferably 20 mass% to 80 mass%, still more preferably 30 mass% to 75 mass%, and particularly preferably 40 mass% to 75 mass%. Here, the content of the Si particles is preferably 15 mass% or more, more preferably 20 mass% or more, still more preferably 30 mass% or more, and particularly preferably 40 mass% or more, from the viewpoint of obtaining a high electrode capacity. In addition, the content of the Si particles is preferably 85 mass% or less, more preferably 80 mass% or less, and still more preferably 75 mass% or less, from the viewpoint of obtaining good cycle characteristics.

A content of the first particles in the negative electrode active material is preferably 10 mass% to 80 mass%, more preferably 10 mass% to 70 mass%, and still more preferably 20 mass% to 60 mass%. Here, the content of the first particles is preferably 10 mass% or more, and more preferably 20 mass% or more, from the viewpoint of obtaining good cycle characteristics. In addition, the content of the first particles is preferably 80 mass% or less, more preferably 70 mass% or less, and still more preferably 60 mass% or less, from the viewpoint of obtaining a high electrode capacity.

Note that, in the case of including two or more kinds of the first particles, the total content thereof is preferably within the above range.

A content of the second particles in the negative electrode active material is preferably 1 mass% to 60 mass%, more preferably 2 mass% to 55 mass%, and still more preferably 5 mass% to 40 mass%. Here, the content of the second particles is preferably 1 mass% or more, more preferably 2 mass% or more, and still more preferably 5 mass% or more, from the viewpoint of obtaining good cycle characteristics. In addition, the content of the second particles is preferably 60 mass% or less, more preferably 55 mass% or less, and still more preferably 40 mass% or less, from the viewpoint of obtaining a high electrode capacity.

Note that, in the case of including two or more kinds of the second particles, the total content thereof is preferably within the above range.

In light of the above, as a combination of the contents of the particles in the negative electrode active material according to the present embodiment, it is preferable that the content of the Si particles is 20 mass% to 80 mass%, the content of the first particles is 10 mass% to 70 mass%, and the content of the second particles is 1 mass% to 60 mass%. The contents of the particles can be changed within the ranges described above.

In the case where the negative electrode active material includes particles other than the Si particles, the first particles, and the second particles, the contents of the Si particles, the first particles, and the second particles can be regarded as a preferred aspect of a ratio of the contents of the Si particles, the first particles, and the second particles, with mass% being converted into parts by mass.

In the negative electrode active material, it is preferable that the content of the first particles is greater than the content of the second particles, from the viewpoint of reducing the volume expansion rate of the entire negative electrode active material and obtaining good cycle characteristics. Specifically, the difference between the content of the first particles and the content of the second particles expressed in mass% is preferably 10 mass% or more and less than 80 mass%, and more preferably 20 mass% to 60 mass%. Here, the difference is preferably 10 mass% or more, and more preferably 20 mass% or more, from the viewpoint of obtaining good cycle characteristics. In addition, the difference is preferably less than 80 mass%, and more preferably 60 mass% or less, from the viewpoint of including a certain amount or more of Si particles and maintaining the electrode capacity due to the Si particles.

The first particles are not particularly limited as long as the volume expansion rate due to Li occlusion is 0% to 80%, and for example, are preferably at least one kind of particles selected from the group consisting of Fe, Al, Si, and an oxide thereof, and Ni, Ti, Cu, B, C, SiC, and a Si alloy.

Examples of the oxide of Fe, Al, and Si include FeO, Fe₂O₃, Al₂O₃, and SiO₂.

Examples of the Si alloy include Si₂Fe, Si₂Ti, Si₂Ni, Si₂Zr, Si₂Cr, Si₂Co, and Si₂Mn.

The second particles are not particularly limited as long as the volume expansion rate due to Li occlusion is 100% to 300%, and for example, are preferably at least one kind of particles selected from the group consisting of AlNi, AlTi, AlFe, and AlCu.

It has been found that the volume expansion rate of the second particles due to Li occlusion is influence by an oxygen content in the second particles. The oxygen content in the second particles is preferably 4 mass% or less, more preferably 3 mass% or less, and still more preferably 2 mass% or less, from the viewpoint of exerting the inherent volume expansion rate of the second particles. The oxygen content is preferably small, and is generally 0.1 mass% or more.

Note that, in the present description, the oxygen content is a value determined by using a heat-melting infrared absorption method carried out in an inert gas.

An oxygen content in the Si particles is preferably 10 mass% or less, more preferably 5 mass% or less, and still more preferably 1 mass% or less, from the viewpoint of not interfering with the occlusion and release of Li as an active material. The oxygen content is preferably small, and is generally 0.1 mass% or more.

The negative electrode active material according to the present embodiment may include other particles in addition to the Si particles, the first particles, and the second particles, as long as the effects of the present invention are not impaired.

Examples of other particles include particles having a volume expansion rate due to Li occlusion of more than 80% and less than 100%. The negative electrode active material may also include particles having a volume expansion rate of more than 300%. However, since the first particles and the second particles are included for the purpose of preventing the expansion of the entire negative electrode active material and alleviating the stress, while the volume expansion rate of the Si particles is 380%, there is no need to actively add the particles having a volume expansion rate of more than 300% for the same purpose. In the case where including other particles produces effects specific to the other particles, it is also preferable to including the other particles.

In the case where particles having a volume expansion rate of more than 80% and less than 100% or other particles having the above specific effects are included, a total content of these particles is preferably 0 mass% to 10 mass%, more preferably 1 mass% to 8 mass%, and still more preferably 2 mass% to 7 mass%. Here, the total content is preferably 0 mass% or more, more preferably 1 mass% or more, and still more preferably 2 mass% or more, from the viewpoint of alleviating the difference in volume expansion and from the viewpoint of suitably exhibiting the above specific effects. In addition, the total content is preferably 10 mass% or less, more preferably 8 mass% or less, and still more preferably 7 mass% or less, from the viewpoint of effectively exhibiting the effects of the first particles and the second particles on the Si particles.

A method for producing the negative electrode active material according to the present embodiment is not particularly limited.

The Si particles, the first particles, and the second particles may each be commercially available or synthesized. In the case of synthesis, the particles can be produced by a known method. In the case where the negative electrode active material includes other particles, the other particles may be either commercially available or synthesized.

The Si particles, the first particles, the second particles, and any other particles each having a preferred average particle diameter may be mixed, or may be mixed and then pulverized, classified or the like. Among them, it is preferable to pulverize the mixture all at once after mixing from the viewpoint of preventing a variation in particle diameter.

The negative electrode active material according to the present embodiment is preferably used in a lithium ion battery.

When used in a lithium ion battery, the negative electrode active material according to the present embodiment is provided on a conductive substrate together with a conductive aid, a binder, and the like as necessary to form a negative electrode.

In the case where the negative electrode active material according to the present embodiment is used in a lithium ion battery, a charge capacity per unit weight of the negative electrode active material is preferably 500 mAh/g or more, more preferably 1000 mAh/g or more, and still more preferably 2500 mAh/g or more, in terms of an initial charge capacity at the first cycle. The higher, the more preferred.

In addition, when 50 cycles of charging and discharging are performed at 1/5C, i.e., a rate of charging or discharging in 5 hours, a capacity retention rate, which is determined by {discharge capacity after 50 cycles/initial discharge capacity (discharge capacity at first cycle)} × 100 (%), is preferably 50% or more, more preferably 70% or more, and still more preferably 90% or more. The higher, the more preferred.

In the case where the negative electrode is formed using the negative electrode active material, the conductive substrate functions as a current collector. The conductive substrate may be made of a material that has been used as a current collector for a negative electrode in the related art, for example, Cu, Ni, Fe, or an alloy thereof. Among them, Cu or a Cu alloy is preferred.

The conductive substrate may be in the form of a foil or plate, and is preferably in the form of a foil from the viewpoint of miniaturization and freedom in shape.

The binder may be any known binder, and examples thereof include a polyvinylidene difluoride (PVdF) resin, a fluororesin such as polytetrafluoroethylene, a polyvinyl alcohol resin, a polyimide resin, a polyamide resin, a polyamide-imide resin, a styrene-butadiene rubber (SBR), or polyacrylic acid. These may be used alone or in combination of two or more kinds thereof. Among them, a polyimide resin is preferred from the viewpoint of stability in an electrochemical reaction and strength of a binding force.

The conductive aid may be any known conductive aid, and examples thereof include carbon black such as Ketjen black, acetylene black, and furnace black, graphite, carbon nanotubes, and fullerene. These may be used alone or in combination of two or more kinds thereof. Among them, Ketjen black or acetylene black is preferred from the viewpoint of electrical conductivity.

The negative electrode active material, the binder, and the conductive aid may be mixed in a known ratio to form a negative electrode. The negative electrode has any thickness.

In the production of the negative electrode, for example, the negative electrode active material, the binder, the conductive aid, and the like can be dissolved or dispersed in a solvent to form a paste, followed by applying to the surface of a conductive substrate, and then they are dried, and optionally compacted or heat-treated to obtain a negative electrode.

The negative electrode active material according to the present embodiment has been described in detail above. Other aspects of the negative electrode active material according to the present embodiment are as follows.
[1] A negative electrode active material including:
   Si particles;
   first particles; and
   second particles, in which
   the first particles have a volume expansion rate due to Li occlusion of 0% to 80%, and
   the second particles have a volume expansion rate due to Li occlusion of 100% to 300%.
[2] The negative electrode active material according to the above [1], in which an average particle diameter of the Si particles and an average particle diameter of the second particles are both 5 µm or less.
[3] The negative electrode active material according to the above [1] or [2], having a content of the Si particles of 20 mass% to 80 mass%, a content of the first particles of 10 mass% to 70 mass%, and a content of the second particles of 1 mass% to 60 mass%.
[4] The negative electrode active material according to the above [3], in which the content of the first particles is greater than the content of the second particles.
[5] The negative electrode active material according to any one of the above [1] to [4], in which the first particles are at least one kind of particles selected from the group consisting of Fe, Al, Si, and an oxide thereof, and Ni, Ti, Cu, B, C, SiC, and a Si alloy.
[6] The negative electrode active material according to any one of the above [1] to [5], in which the second particles are at least one kind of particles selected from the group consisting of AlNi, AlTi, AlFe, and AlCu.
[7] The negative electrode active material according to the above [6], in which the second particles have an oxygen content of 4 mass% or less.
[8] The negative electrode active material according to any one of the above [1] to [7], which is for use in a lithium ion battery.

### EXAMPLES

Hereinafter, the present invention will be described in detail with reference to Examples, but the present invention is not limited to these Examples.

### [Examples 1 to 30 and Comparative Examples 1 to 6]

Si particles were mixed with particles A and particles B shown in Table 1 under wet conditions using a bead mill. The mixing ratio of the particles, that is, the contents of the particles, is as shown in Table 1. Note that, in Comparative Examples 4 and 5, "-" means that the particles B were not mixed, and only the Si particles and the particles A were mixed.

Note that, among the particles, Si, Fe, and AlNi particles were produced by the following methods.

Molten Si was sprayed by using a gas atomization method to prepare Si particles in the form of a powder.

Similarly, the Fe and the AlNi particles were each prepared into a powder particles by using a gas atomization method. Note that, for the AlNi particles used in Comparative Example 6, the oxygen content was adjusted by immersing the particles in water.

Each powder was pulverized using a wet bead mill to adjust the particle diameter. Note that, the average particle diameter was adjusted by changing the pulverization time. The powder having the adjusted particle diameter was wet mixed using a bead mill and dried.

### [Average Particle Diameter]

As the average particle diameter of the particles, the median diameter (D50) was determined from the volume-based particle size distribution using a laser diffraction/scattering type particle size distribution measuring device (MT-3300, manufactured by MicrotracBEL Corp.). The results are shown in Table 1.

### [Volume Expansion Rate]

Particles having a particle diameter of about 15 µm were mixed with acetylene black (conductive aid) and polyimide (binder) in a ratio of particles: acetylene black:polyimide = 80:5:15 (mass ratio) to prepare a slurry. The slurry was applied to a stainless steel (SUS316L) foil in a thickness of 50 µm and dried to obtain a working electrode.

Next, a half cell was prepared using a Li foil as a counter electrode and a non-aqueous electrolytic solution prepared by dissolving LiPF₆ at a concentration of 1 mol/L in a mixed solvent of ethylene carbonate (EC)/dimethyl carbonate (DEC) = 1/1 (molar ratio).

The obtained half cell was charged at a constant current of 0.1 mA until the voltage was 0.002 V vs. [Li⁺/Li]. Then, the amount of change in thickness of the working electrode after charging relative to the thickness of the working electrode before charging was measured using a micrometer. A value obtained by dividing the amount of change in electrode thickness by the thickness of the electrode layer before charging and discharging was defined as the volume expansion rate. The volume expansion rate of the particles after charging was determined. The results are shown in Table 1. Note that, although not shown in Table 1, the volume expansion rate of the Si particles is 380%.

### [Oxygen Content]

The oxygen content in the second particle, i.e., the particles B, was determined by using a heat-melting infrared absorption method in an inert gas (TC600 oxygen and nitrogen simultaneous analyzer, manufactured by LECO JAPAN CORPORATION). The results are shown in Table 1.

### [Electrode Capacity and Cycle Characteristics]

The obtained negative electrode active material (100 parts by mass), 6 parts by mass of Ketjen black (manufactured by Lion Corporation) as a conductive aid, and 19 parts by mass of polyimide, being a thermoplastic resin, as a binder were mixed, the mixture was dissolved or dispersed in N-methyl-2-pyrrolidone (NMP) as a solvent, to obtain a paste. The obtained paste was applied to the surface of a stainless steel foil (SUS316L, thickness: 20 µm) to a thickness of 50 µm by using a doctor blade method. Next, the negative electrode active material layer was dried and compacted by a roll press. Next, the electrode was punched into a disc shape having a diameter of 11 mm, which was used as a working electrode.

The working electrode obtained above was disposed in a positive electrode can of a coin-type cell, and a Li foil (thickness: 500 µm) having a diameter of 11 mm was disposed as a counter electrode in a negative electrode can, with a polyolefin-based microporous membrane as a separator disposed therebetween. Next, a non-aqueous electrolytic solution prepared by dissolving LiPF₆ at a concentration of 1 mol/L in a mixed solvent of ethylene carbonate (EC)/diethyl carbonate (DEC) = 1/1 (molar ratio) was injected as an electrolytic solution, and the positive electrode can and the negative electrode can were crimped to prepare a coin-type battery as a half cell.

One cycle including constant current charging and discharging at a current value of 0.2 mA was performed by using the coin-type battery. The initial discharge capacity C₀ (mAh/g) was calculated based on a value obtained by dividing the capacity (mAh) used for releasing Li by the amount (g) of the negative electrode active material.

The results are shown as "electrode capacity (initial)" in Table 1. The evaluation criteria are as follows: A, B, or C indicates pass, and D indicates failed.
A: the initial discharge capacity is 2500 mAh/g or more
B: the initial discharge capacity is 1000 mAh/g or more and less than 2500 mAh/g
C: the initial discharge capacity is 500 mAh/g or more and less than 1000 mAh/g
D: the initial discharge capacity is less than 500 mAh/g

In the second cycle and subsequent cycle of the charging and discharging test, the charging and discharging test was carried out at a rate of 1/5C, that is, a rate of charging or discharging in 5 hours. The charging and discharging cycle was carried out 50 times, the capacity retention rate after 50 cycles was calculated based on the following formula, and the cycle characteristics were evaluated. {Discharge capacity after 50 cycles/initial discharge capacity (discharge capacity at first cycle)} × 100 (%)

The results are shown as "cycle characteristics" in Table 1. The evaluation criteria are as follows: A, B, or C indicates pass, and D indicates failed.
A: the capacity retention rate is 90% or more
B: the capacity retention rate is 70% or more and less than 90%
C: the capacity retention rate is 50% or more and less than 70%
D: the capacity retention rate is less than 50%

**[Table 1]**

| | Negative electrode active material | | | Content (mass%) | | | Volume expansion rate (%) | | Oxygen content (mass%) |
|---|---|---|---|---|---|---|---|---|---|
| | - | Particles A | Particles B | Si particles | Particles A | Particles B | Particles A | Particles B | Particles B |
| Example 1 | | Fe | AlNi | 60 | 35 | 5 | 13 | 240 | 1.8 |
| Example 2 | | Ni | AlNi | 60 | 35 | 5 | 11 | 240 | 2.1 |
| Example 3 | | Ti | AlTi | 60 | 35 | 5 | 16 | 238 | 1.7 |
| Example 4 | | Cu | AlCu | 60 | 35 | 5 | 13 | 230 | 2.5 |
| Example 5 | | B | AlCu | 60 | 35 | 5 | 12 | 225 | 2.4 |
| Example 6 | | C | AlFe | 60 | 35 | 5 | 10 | 228 | 2.2 |
| Example 7 | | Al₂O₃ | AlNi | 60 | 35 | 5 | 22 | 240 | 1.9 |
| Example 8 | | SiO₂ | AlNi | 60 | 35 | 5 | 26 | 240 | 1.6 |
| Example 9 | | FeO | AlNi | 60 | 35 | 5 | 28 | 240 | 1.8 |
| Example 10 | | Fe₂O₃ | AlNi | 60 | 35 | 5 | 45 | 240 | 1.9 |
| Example 11 | | SiC | AlNi | 60 | 35 | 5 | 20 | 240 | 1.9 |
| Example 12 | | Si₂Fe | AlNi | 60 | 35 | 5 | 33 | 240 | 1.8 |
| Example 13 | | Si₂Ti | AlNi | 60 | 35 | 5 | 32 | 240 | 1.8 |
| Example 14 | | Si₂Ni | AlNi | 60 | 35 | 5 | 35 | 240 | 1.7 |
| Example 15 | | Si₂Zr | AlNi | 60 | 35 | 5 | 37 | 240 | 1.9 |
| Example 16 | | Si₂Cr | AlNi | 60 | 35 | 5 | 46 | 240 | 1.9 |
| Example 17 | | Si₂Co | AlNi | 60 | 35 | 5 | 51 | 240 | 1.8 |
| Example 18 | | Si₂Mn | AlNi | 60 | 35 | 5 | 44 | 240 | 1.9 |
| Example 19 | | Si₂Ni | AlNi | 30 | 65 | 5 | 35 | 240 | 2 |
| Example 20 | Si particles | Si₂Ni | AlNi | 80 | 15 | 5 | 35 | 240 | 2.1 |
| Example 21 | | Si₂Ni | AlNi | 60 | 35 | 5 | 35 | 240 | 1.9 |
| Example 22 | | Ni | AlNi | 60 | 35 | 5 | 11 | 240 | 1.8 |
| Example 23 | | Si₂Ni | AlNi | 60 | 35 | 5 | 35 | 240 | 1.9 |
| Example 24 | | Ni | AlNi | 60 | 35 | 5 | 11 | 240 | 1.5 |
| Example 25 | | Si₂Ni | AlNi | 60 | 39 | 1 | 35 | 240 | 2 |
| Example 26 | | Si₂Ni | AlNi | 35 | 10 | 55 | 35 | 240 | 1.7 |
| Example 27 | | Si₂Ni | AlNi | 59.5 | 0.5 | 40 | 35 | 240 | 1.8 |
| Example 28 | | Si₂Ni | AlNi | 15 | 80 | 5 | 35 | 240 | 1.9 |
| Example 29 | | Si₂Ni | AlNi | 85 | 10 | 5 | 35 | 240 | 1.4 |
| Example 30 | | Si₂Ni | AlNi | 18 | 67 | 15 | 35 | 240 | 1.7 |
| Comparative Example 1 | | Si₂Ni | Sn | 60 | 35 | 5 | 35 | 450 | 1.8 |
| Comparative Example 2 | | SnCu | AlNi | 60 | 35 | 5 | 225 | 240 | 1.6 |
| Comparative Example 3 | | Ni | Si₂Ni | 60 | 35 | 5 | 5 | 35 | 1.5 |
| Comparative Example 4 | | AlNi | - | 60 | 40 | - | 240 | - | 1.6 |
| Comparative Example 5 | | Si₂Ni | - | 60 | 40 | - | 35 | - | - |
| Comparative Example 6 | | Ni | AlNi | 60 | 35 | 5 | 11 | 39 | 5.2 |

**[Table 1] (continued)**

| | Average particle diameter (µm) | | | Electrode capacity (initial) | Cycle characteristics |
|---|---|---|---|---|---|
| | Si particles | Particles A | Particles B | | |
| Example 1 | 1.6 | 3.2 | 1.5 | B | B |
| Example 2 | 1.1 | 3.6 | 1.6 | B | B |
| Example 3 | 1.6 | 2.4 | 1.4 | B | B |
| Example 4 | 1.5 | 4.3 | 1.9 | B | B |
| Example 5 | 0.9 | 1.5 | 2.1 | B | B |
| Example 6 | 1.2 | 2.5 | 2.5 | B | B |
| Example 7 | 0.8 | 0.7 | 1.4 | B | B |
| Example 8 | 0.9 | 0.9 | 1.5 | B | B |
| Example 9 | 1.3 | 0.7 | 1.6 | B | B |
| Example 10 | 1 | 0.8 | 1.3 | B | B |
| Example 11 | 1.2 | 1.1 | 1.4 | B | B |
| Example 12 | 1.1 | 1.2 | 1.5 | B | B |
| Example 13 | 1.2 | 1.3 | 1.5 | B | B |
| Example 14 | 0.9 | 1.1 | 1.4 | B | B |
| Example 15 | 0.9 | 1.2 | 1.6 | B | B |
| Example 16 | 1 | 1.4 | 1.8 | B | B |
| Example 17 | 1.1 | 1.3 | 1.5 | B | B |
| Example 18 | 1.3 | 1.5 | 1.6 | B | B |
| Example 19 | 2.2 | 4.4 | 4 | C | A |
| Example 20 | 2.6 | 4.2 | 3.9 | A | C |
| Example 21 | 2.4 | 4.5 | 4.3 | B | B |
| Example 22 | 3.1 | 4.1 | 4.7 | B | B |
| Example 23 | 7.3 | 7.8 | 8.2 | B | C |
| Example 24 | 7.2 | 7.4 | 9.1 | B | C |
| Example 25 | 2.4 | 4.5 | 4.3 | A | C |
| Example 26 | 3.1 | 4.1 | 4.7 | C | C |
| Example 27 | 1.1 | 1.6 | 1.8 | A | C |
| Example 28 | 0.8 | 0.9 | 1.2 | C | A |
| Example 29 | 1.4 | 1.1 | 1.2 | A | C |
| Example 30 | 0.9 | 1.8 | 1.5 | C | A |
| Comparative Example 1 | 1.8 | 1.4 | 2.5 | B | D |
| Comparative Example 2 | 1.1 | 1.9 | 1.7 | B | D |
| Comparative Example 3 | 1.5 | 1.6 | 1.9 | B | D |
| Comparative Example 4 | 1.8 | 1.8 | - | B | D |
| Comparative Example 5 | 1.5 | 1.5 | - | B | D |
| Comparative Example 6 | 1.1 | 3.6 | 1.6 | B | D |

As seen from the above results, the negative electrode active material according to the present embodiment has both a high electrode capacity and good cycle characteristics. This is thought to be because the large expansion of the Si particles during Li occlusion was alleviated in the entire electrode by mixing the first particles and the second particles having different volume expansion rates.

On the other hand, Comparative Example 4 which did not include the first particles and Comparative Example 5 which did not include the second particles have poor cycle characteristics, so that it can be seen that the effects of the present invention cannot be obtained by using only one of the first particles and the second particles. This is because, in the case of Comparative Example 5 which included only the Si particles and the first particles, the difference in expansion between the first particles and the Si particles was large, causing the electrode to collapse. In addition, it is thought to be because in the case of including only the Si particles and the second particles as in Comparative Example 4, the second particles expand to a certain extent due to Li occlusion as well as the Si particles, and as a result, the expansion of the entire electrode became large, and the electrode collapsed.

Comparative Example 2, Comparative Example 3, and Comparative Example 6 are examples including two kinds of particles having different volume expansion rates in addition to the Si particles. However, even when two kinds of first particles (Comparative Example 3 and Comparative Example 6) or two kinds of second particles (Comparative Example 2) were included, good cycle characteristics are not achieved since the other particles, that is second particles or the first particles, were not included. This is because, similar to Comparative Examples 4 and 5, in the case where the electrode does not include particles having a difference in expansion different by a certain amount or more, the electrode collapses. In Comparative Example 6, AlNi was used as the particles B, but in the other Examples or Comparative Example 2, the volume expansion rate of this AlNi was 240%. In response to this, when the oxygen content in AlNi was increased to 5.2 mass%, the volume expansion rate decreased significantly to 39%, and as a result, the particles did not satisfy the condition for the second particles, that is, a volume expansion rate due to Li occlusion of 100% to 300%.

Comparative Example 1 is an example including, in addition to the Si particles, the first particles and particles having a volume expansion rate greater than that of the second particles. As a result, good cycle characteristics are not achieved, and it can be seen that the effects of the present invention can be exhibited when the second particles having a volume expansion rate in the range of 100% to 300% are used in combination with the first particles.

As seen from the results in Examples 1 to 18, when two kinds of particles having a volume expansion rate within the range of the first particles and the second particles were included in addition to the Si particles, the effects of the present invention can be obtained widely regardless of the kind of particles.

As seen from the results in Examples 2, 22, and 24 and the results in Examples 14, 21, and 23, when the average particle diameters of the Si particles and the second particles were 5 µm or less, the cycle characteristics are improved. This is thought to be because a smaller average particle diameter leads to a smaller absolute amount of volume expansion.

As seen from the results in Examples 14, 19, 20, and 25 to 30, when the content of the Si particles was set to a certain amount or more, a high electrode capacity can be obtained, whereas when the contents of the first particles and the second particles were relatively small, the cycle characteristics also decrease. Therefore, it is desirable to optimize the content of each particle according to the desired characteristics.

As seen from the results in Comparative Example 3 or 5, good cycle characteristics cannot be obtained without the second particles, whereas the cycle characteristics were improved by including only 1 mass% of the second particles as in Example 25. Thus, it can be seen that the effects of the present invention can be exhibited even when the content of the second particles is smaller than that of the first particles.

Although the present invention has been described in detail and with reference to specific embodiments, it will be apparent to those skilled in the art that various changes and modifications can be made therein without departing from the spirit and scope of the present invention. The present application is based on a Japanese patent application (No. 2022-122195) filed on July 29, 2022 and a Japanese patent application (No. 2023-067211) filed on April 17, 2023, the contents of which are incorporated herein by reference.

## Claims

1. A negative electrode active material comprising:
Si particles;
first particles; and
second particles, wherein
the first particles have a volume expansion rate due to Li occlusion of 0% to 80%, and
the second particles have a volume expansion rate due to Li occlusion of 100% to 300%.

2. The negative electrode active material according to claim 1, wherein an average particle diameter of the Si particles and an average particle diameter of the second particles are both 5 µm or less.

3. The negative electrode active material according to claim 1, having a content of the Si particles of 20 mass% to 80 mass%, a content of the first particles of 10 mass% to 70 mass%, and a content of the second particles of 1 mass% to 60 mass%.

4. The negative electrode active material according to claim 3, wherein the content of the first particles is greater than the content of the second particles.

5. The negative electrode active material according to claim 1, wherein the first particles are at least one kind of particles selected from the group consisting of Fe, Al, Si, and an oxide thereof, and Ni, Ti, Cu, B, C, SiC, and a Si alloy.

6. The negative electrode active material according to claim 1, wherein the second particles are at least one kind of particles selected from the group consisting of AlNi, AlTi, AlFe, and AlCu.

7. The negative electrode active material according to claim 6, wherein the second particles have an oxygen content of 4 mass% or less.

8. The negative electrode active material according to any one of claims 1 to 7, which is for use in a lithium ion battery.
